Europäisches Patentamt

European Patent Office

Office européen des brevets

(19)

(11) Numéro de publication : **0 521 770 A1**

# (12) DEMANDE DE BREVET EUROPEEN

(21) Numéro de dépôt : **92401854.2**

(22) Date de dépôt : **30.06.92**

(51) Int. Cl.⁵ : **H02J 7/14,** H02J 7/24

(30) Priorité : **02.07.91 FR 9108247**

(43) Date de publication de la demande :
**07.01.93 Bulletin 93/01**

(84) Etats contractants désignés :
**DE ES GB IT SE**

(71) Demandeur : **REGIE NATIONALE DES USINES
RENAULT S.A.
34, Quai du Point du Jour
F-92109 Boulogne Billancourt (FR)**

(72) Inventeur : **Mahe, Michel
7, rue des Prés aux Bois
F-78000 Versailles (FR)**
Inventeur : **Malvot, Gérard
107, ruelle à l'âne
F-49400 Saumur (FR)**
Inventeur : **Romagny, Alex
1, Avenue des Prés
F-78170 La Celle St. Cloud (FR)**

(54) **Perfectionnements au circuit de charge de la batterie d'accumulateurs d'un véhicule automobile.**

(57)   Un tel circuit de charge comprend un alternateur (12) entraîné par le moteur, un pont redresseur (20) et un régulateur (28). L'invention consiste essentiellement à disposer le régulateur (28) dans le même boîtier que le circuit (61) de commande d'injection et d'allumage d'un moteur à injection. Cela soustrait le régulateur aux températures extrêmes et aux vibrations intenses qu'il subissait dans le bâti de l'alternateur. La fiabilité du circuit de charge est notablement augmentée et sa connectique est notablement simplifiée.

FIG. 1

EP 0 521 770 A1

L'invention se rapporte à des perfectionnements au circuit de charge de la batterie d'accumulateurs d'un véhicule automobile équipé d'un moteur à injection.

Le circuit de commande d'injection et d'allumage d'un moteur à injection est alimenté par la batterie, à travers un interrupteur actionné par la clef de contact. Il comporte un calculateur électronique qui, d'une part, reçoit entre autres signaux, le signal à fréquence variable produit par un capteur de déplacement associé à une roue dentée qui est montée sur le volant d'inertie du moteur et, d'autre part, commande à travers des étages de puissance, l'allumage des bougies du moteur et le fonctionnement des électrovannes de ses injecteurs. Ce circuit de commande est monté dans un boîtier qui est disposé près du moteur.

Le circuit de charge de la batterie d'accumulateurs d'un véhicule automobile comprend : un alternateur, un pont redresseur, un régulateur et des connecteurs.

L'alternateur est du type triphasé et comporte :
(1) un bâti monté fixe sur le châssis du véhicule et électriquement relié à lui (son emplacement sous le capot du moteur étant choisi pour qu'il soit abondamment ventilé par l'air extérieur),
(2) un stator formé par trois enroulements induits disposés en étoile, et
(3) un rotor inducteur, entraîné par le moteur au moyen d'une courroie.

Le pont redresseur comporte six diodes, deux à deux raccordées aux trois enroulements du stator. Il est monté fixe dans le bâti de l'alternateur, sa sortie (+) étant reliée à une borne isolée (B+) installée sur le bâti et sa borne (-), directement reliée au bâti et donc à la masse générale du véhicule.

La batterie est à la fois disposée à quelques dizaines de centimètres de l'alternateur et installée de façon à être relativement protégée des courants d'air de ventilation du compartiment moteur. La borne (+) de la batterie est raccordée à la borne (B+) du pont redresseur par un conducteur relativement court, muni à ses deux extrémités de cosses de raccordement à vis de serrage, la borne (-) de la batterie étant, de son côté, reliée, par un conducteur du même type, à la masse du véhicule.

Le régulateur est installé dans le bâti de l'alternateur. Il comporte six bornes respectivement reliées :
(1) à la borne isolée (B+) montée sur le châssis de l'alternateur,
(2) à la masse du bâti,
(3) à un enroulement du stator,
(4) à la borne (-) du rotor,
(5) à la fois, à la borne (+) du rotor et à une borne (C+) du bâti, elle-même reliée à la borne (+) de la batterie à travers la clef de contact par un conducteur long de plusieurs mètres, et
(6) à une borne (L) du bâti reliée à une lampe-témoin, indicatrice d'un défaut du circuit de charge, elle-même alimentée par la batterie, à travers la clef de contact.

Le régulateur est en fait un circuit électronique complexe à fonctions multiples. Il est tout d'abord adapté à asservir, à une valeur de consigne, l'amplitude de la tension continue délivrée par le pont redresseur. Pour ce faire, il fournit au rotor de l'alternateur, des courants continus pulsés périodiques, à rapport cyclique (durée/période) modulé autour d'une valeur moyenne, en fonction de l'écart entre l'amplitude de la tension continue appliquée à la batterie et la valeur de consigne de cette même tension.

Pour tenir compte du comportement de charge de la batterie en fonction de sa température, une sonde thermique est montée dans le régulateur et est utilisée pour faire varier la valeur de consigne de la tension de charge, la température interne du régulateur étant, à cet égard, considérée comme représentative de la température de la batterie.

Un des balais du rotor de l'alternateur étant directement relié à la borne (+) de la batterie, à travers l'interrupteur associé à la clef de contact, le passage du courant continu pulsé, appliqué au rotor par le régulateur, est établi par la mise à la masse de l'autre balai du rotor. Une telle disposition protège la batterie au cas où, le contact étant coupé, serait mis en court-circuit l'un ou l'autre des composants électroniques de puissance (un darlington NPN et une diode, dite de roue libre, associée qui, en fonctionnement normal, assurent le passage vers la masse du courant continu pulsé appliqué au rotor-et du courant de sens inverse produit au moment de la coupure du précédent.

Une première fonction complémentaire du régulateur est de détecter la rupture de la courroie d'entraînement de l'alternateur. Pour ce faire, la tension de sortie d'un enroulement du stator est appliquée à la borne (3) du régulateur et son absence, entraîne la commande de l'allumage d'une lampe-témoin.

Une deuxième fonction complémentaire du régulateur est de détecter la coupure de la liaison assurée par le conducteur d'alimentation de la batterie. Pour ce faire, les bornes (1) et (5) du régulateur reçoivent respectivement les tensions présentes aux deux extrémités du conducteur d'alimentation qui relie le pont redresseur à la batterie. Une différence entre ces deux tensions signifie une rupture de la liaison. Elle entraîne également l'allumage de la lampe-témoin.

Ainsi constitué, le circuit de charge de la batterie d'accumulateurs des véhicules automobiles d'aujourd'hui fonctionne d'une manière généralement satisfaisante. Toutefois, les statistiques des défaillances des différents éléments constitutifs de l'ensemble formé par la batterie et son circuit de charge, montrent que, sur un véhicule automobile, les taux de défaillance peuvent être non négligeables. Dans la mesure où les taux de défaillance de l'alternateur, du pont redresseur et de la batterie, sont dus aux caractéristiques propres de chacun de ces trois organes, la présente invention n'a pas pour objet d'y remédier directement. Elle se propose, par contre, de remédier aux défaillances de la batterie, du régulateur et du câblage qui sont dues à l'environnement dans lequel ces organes sont placés. Il est en effet évident que le bâti de l'alternateur, dans lequel est monté le régulateur, est un site particulièrement défavorable pour l'électronique et la connectique du régulateur : la plage étendue des températures et le niveau élevé des vibrations subies par l'alternateur, nuisent d'une manière significative à la fiabilité du régulateur proprement dit et de toute la connectique du circuit de charge de la batterie.

Par ailleurs, le fait de réguler la tension de charge de la batterie en fonction de la température interne du régulateur et non pas en fonction de celle de la batterie elle-même, entraîne pour la batterie un taux de défaillances relativement important. Ces défaillances découlent du fait que la température interne du régulateur varie en fonction des conditions de roulage du véhicule (vitesse et température extérieure), ce qui n'est pas le cas de celles de la batterie puisque celle-ci n'est pas soumise aux mêmes conditions de ventilation que le bâti de l'alternateur. Le décalage entre ces deux températures fait que les conditions de charge de la batterie sont rarement des conditions optimales, ce qui, suivant le signe et l'amplitude de ce décalage, entraîne des surcharges ou des sous-charges systématiques plus ou moins graves qui nuisent grandement à la durée de vie des batteries et sont responsables de nombreux cas de défaillances enregistrés par elles.

Une solution à ce problème serait de placer la sonde thermique sur la batterie et non plus dans le régulateur placé dans le bâti de l'alternateur, mais cette manière de faire entraînerait l'installation d'un capteur sur la batterie et d'une connectique complémentaire, induisant par là-même, d'autres risques de défaillances et d'autres postes de dégradation de la fiabilité de l'ensemble formé par la batterie et son circuit de charge.

Une autre solution à tous les problèmes précédents consiste à sortir le régulateur du bâti de l'alternateur (comme cela se faisait pour le régulateur électromécanique universellement utilisé avant l'apparition des régulateurs électroniques) et à le placer au voisinage de la batterie. Dans ce cas malheureusement, le nombre d'éléments de connectique (câbles et raccords) à utiliser s'accroît notablement (environ deux fois) et le gain de fiabilité acquis par l'amélioration des conditions de charge de la batterie serait presque entièrement compensé par une diminution de la fiabilité afférente à la connectique.

En conséquence de ce qui précède, un premier but de l'invention est de perfectionner l'agencement des éléments constitutifs du circuit de charge de la batterie d'accumulateurs d'un véhicule automobile, de manière à notablement améliorer la fiabilité de l'ensemble et donc d'écarter au mieux les causes usuelles des défaillances affectant la batterie, le régulateur et la connectique.

Un second but de l'invention est d'adapter à ce nouvel agencement des éléments du circuit de charge, les moyens de réaliser les fonctions complémentaires du régulateur. Selon l'invention, le circuit de charge de la batterie d'accumulateurs d'un véhicule automobile équipé d'un moteur à injection, du genre comprenant un alternateur entraîné par le moteur, un pont redresseur associé et un régulateur électronique, est caractérisé en ce que le régulateur est, d'une part, disposé dans le même boîtier que le circuit de commande d'injection et d'allumage du moteur et, d'autre part, adapté à établir une connexion périodique entre la borne (+) de la batterie et l'un des balais de l'inducteur tournant de l'alternateur, l'autre balai étant en permanence relié à la masse générale du véhicule, ladite connexion périodique étant faite avec un rapport cyclique (durée/période) modulé de manière à asservir à une valeur de consigne la tension continue produite par le pont redresseur.

Grâce à cette disposition, le régulateur électronique de charge n'est plus soumis aux températures extrêmes et aux vibrations internes subies par le bâti de l'alternateur, ce qui en améliore grandement la fiabilité. Etant monté dans le même boîtier que le circuit de commande d'injection et d'allumage du moteur, le régulateur peut être installé en un emplacement optimal qui présente, d'une part, des vibrations faibles et des écarts de température limités et qui, d'autre part, permet aux connecteurs d'avoir une longueur réduite au minimum. Etant monté dans le même boîtier que le circuit de commande électronique d'injection et d'allumage du moteur, le régulateur de charge bénéficie de la présence de la tension de batterie qui y parvient à travers l'interrupteur associé à la clef de contact. De la sorte, aucun nouveau connecteur n'est nécessaire. Par ailleurs, au cas où l'interrupteur électronique (un darlington PNP) utilisé pour périodiquement connecter l'inducteur à la batterie, se mettrait en court-circuit, la décharge de la batterie ne pourrait se produire dès lors que le contact est coupé. De plus, le long conducteur mesurant plusieurs mètres qui, dans le circuit de charge usuel antérieur à l'invention, relie l'interrupteur associé à la clef de contact à l'un des balais de l'inducteur tournant et qui est parcouru par des courants pulsés à fronts raides, est remplacé par un conducteur court mesurant quelques décimètres. Ce conducteur court relie ce même balai à l'interrupteur électronique de sortie du régulateur de charge et à la diode, dite de roue libre, prévue pour court-circuiter les courants de coupure des précédents. De ce fait, il est parcouru par un courant moyen présentant une ondulation résiduelle. Un tel conducteur court, parcouru par de tels courants filtrés, est à la fois moins cher et producteur de beaucoup moins de parasites, que le conducteur homologue du circuit de charge antérieur. Ce qui est un double avantage complémentaire de l'invention.

Selon une caractéristique complémentaire de l'invention, le circuit de commande d'injection et d'allumage du moteur comportant un calculateur électronique à l'entrée duquel est appliqué un signal à fréquence variable représentatif de la vitesse de rotation instantanée du moteur, le régulateur comporte un circuit annexe à deux entrées, la première recevant ledit signal de vitesse et la seconde, l'ondulation résiduelle produite par le pont redresseur, ledit circuit annexe étant adapté à produire un signal de commande d'allumage d'au moins une lampe-témoin lorsque disparaît ladite ondulation et/ou lorsque le décalage entre sa fréquence fondamentale et une fréquence de référence variable proportionnelle à celle dudit signal de vitesse, franchit un ou plusieurs seuils déterminés.

Grâce à cette disposition, la détection d'une absence d'ondulation résiduelle sur la tension continue, produite par le pont redresseur et appliquée à l'entrée du circuit annexe du régulateur, provoque l'allumage d'une première lampe-témoin. Un tel allumage signifie soit que l'alternateur n'est plus entraîné par le moteur et donc que la courroie d'entraînement de son rotor est rompue, soit que le conducteur qui relie la sortie du pont redresseur à la borne (+) de la batterie, n'assure plus sa fonction (il est alors ou déconnecté ou cassé). Dans un autre cas de figure, la détection d'un écart déterminé entre la fréquence de l'ondulation résiduelle et la fréquence de référence du moment, provoque l'allumage d'une seconde lampe-témoin. Ce qui signifie un glissement important de la courroie d'entraînement de l'alternateur et donc l'état défectueux de cette courroie. Dans les deux cas d'allumage de ces lampes-témoins, le conducteur du véhicule est informé qu'une visite au garage s'impose au plus tôt.

Les caractéristiques et avantages de l'invention apparaîtront d'une manière plus précise à la suite de la description ci-après d'une forme de réalisation préférée de l'invention donnée à titre non limitatif, en référence aux dessins annexés dans lesquels :

- la figure 1 représente une forme de réalisation du circuit de charge de la batterie d'accumulateurs d'un véhicule automobile, perfectionné selon l'invention ;

- la figure 2 représente les étages fonctionnels du régulateur de charge et de ses circuits annexes selon l'invention.

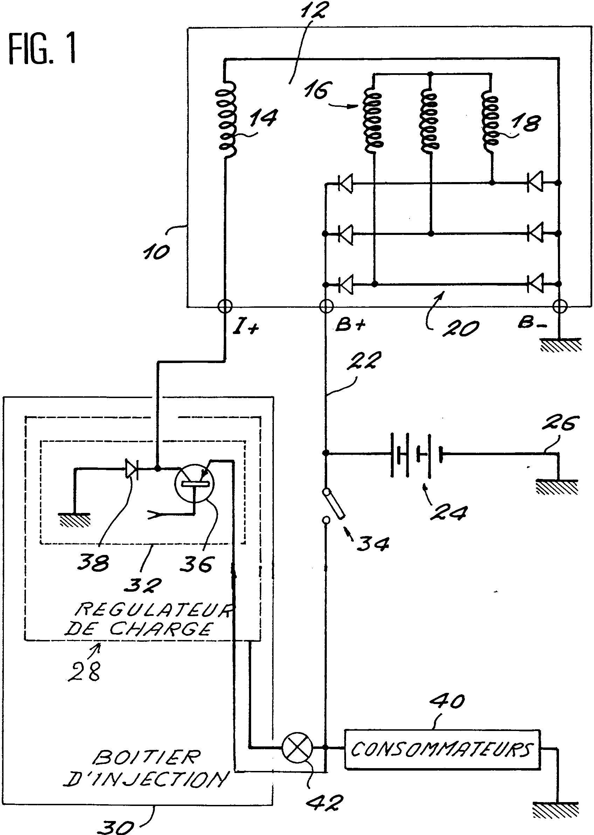

Selon la figure 1, est représenté en 10, le bâti d'un alternateur triphasé 12 comprenant un inducteur tournant (rotor) 14 entraîné par le moteur au moyen d'une courroie non représentée et un induit fixe (stator) 16 à trois enroulements tels 18, disposés en étoile. Dans le bâti 10 est monté fixe un pont redresseur 20 à six bras, les diodes de ces bras étant deux à deux connectées à l'un des enroulements du stator 16. Les bornes positive et négative de sortie du pont redresseur 20 sont reliées à deux bornes montées fixes sur le bâti 10 : une borne isolée (B+) et une borne nue (B-). La borne (B+) est reliée par un connecteur court 22 pourvu de cosses à vis, à la borne (+) d'une batterie d'accumulateurs 24. La borne (B-) et le bâti 10 sont directement reliés à la masse générale du châssis du véhicule. La borne (-) de la batterie 24 est reliée à cette masse générale par un connecteur 26, pourvu d'une cosse à vis.

L'inducteur tournant 14 de l'alternateur 12 possède deux balais respectivement connectés à une borne isolée (I+) montée sur le bâti 10 et à la borne nue (B-) solidaire du bâti 10. La borne isolée (I+) est reliée à la sortie d'un régulateur de charge 28, disposé dans un boîtier 30 contenant le circuit de commande d'injection et d'allumage du moteur. L'étage de sortie du régulateur de charge 28 est un interrupteur électronique de puissance 32, connecté à la borne (+) de la batterie 24 à travers l'interrupteur électromécanique 34 associé à la clef de contact du véhicule. Cet interrupteur de puissance 32 est constitué par le transistor de sortie d'un circuit darlington PNP 36 et par une diode 38, dite de roue libre, montée conductrice de la masse vers le collecteur sur ce transistor.

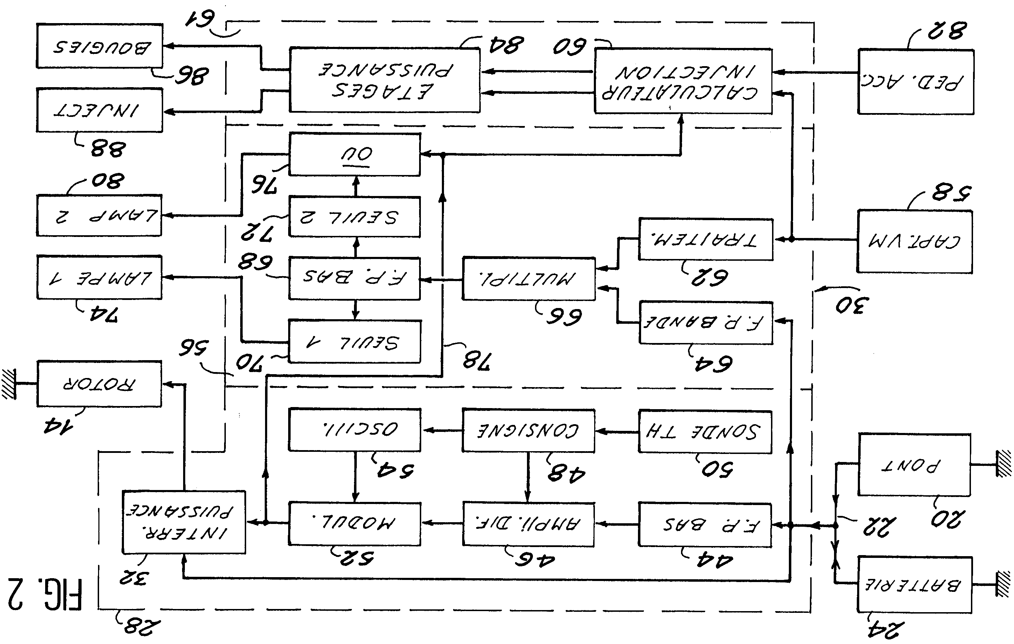

La sortie de l'interrupteur 34, associé à la clef de contact, est appliquée aux circuits consommateurs 40 du véhicule et à au moins une lampe-témoin 42 dont l'allumage est commandé par le circuit annexe du régulateur de charge 28, comme cela sera expliqué ci-après en référence à la figure 2.

Selon la figure 2, le pont redresseur 20 est relié à la batterie 24 par le connecteur 22 et tous deux sont connectés à l'entrée du régulateur de charge 28 (à travers l'interrupteur 34 de la clef de contact, non représenté ici pour ne pas surcharger le dessin). Plus précisément, la tension brute produite par le pont redresseur 20 est, dans le régulateur 28, appliquée à l'entrée d'un filtre passe-bas 44 qui transmet à la première entrée d'un amplificateur différentiel 46, une tension continue filtrée. La seconde entrée de l'amplificateur 46 est reliée à la sortie d'un étage 48 établissant une valeur de consigne, placée sous la dépendance d'une sonde thermique 50, incorporée au régulateur 28. La sortie de l'amplificateur 46 est appliquée à un étage modulateur 52 recevant un signal à fréquence sensiblement constante, (de 10 kilohertz par exemple), produite par un oscillateur 54. L'étage modulateur 52 est adapté à délivrer des impulsions rectangulaires à la fréquence d'entrée, leur rapport cyclique (durée/période) variant linéairement autour d'une valeur moyenne, en fonction de l'amplitude et du signe du signal de sortie de l'amplificateur 46. Le signal de sortie du modulateur 52 est appliqué en commande d'entrée à l'interrupteur de puissance 32, c'est-à-dire (en référence à la fig.1) à la base du transistor d'entrée du circuit darlington PNP 36, la tension de la batterie 24 étant appliquée à l'émetteur du transistor de sortie de ce circuit 36, son collecteur et la cathode de la diode de roue libre 38, étant reliés à l'un des balais du rotor 14.

Au régulateur de charge 28, est associé, dans le boîtier 30, un circuit annexe 56, adapté à détecter les défauts du circuit de charge. Pour ce faire, le signal de fréquence variable, produit par un capteur de déplacement 58 associé à la couronne dentée du volant d'inertie du moteur (jusqu'à ce jour, uniquement appliqué à l'entrée du calculateur 60 du circuit de commande d'injection 61), est également appliqué à l'entrée d'un circuit de traitement 62. Ce circuit 62 a pour objet de produire une fréquence de référence proportionnelle à tout moment à la fréquence fondamentale de son signal d'entrée. Le facteur de proportionnalité de cette conversion est constant et prend en compte le nombre de dents de la couronne dentée du volant d'inertie du moteur, le rapport de réduction introduit par la courroie d'entraînement de l'inducteur 14, le nombre de paires de pôles de l'alternateur 12 et finalement le nombre de bras du pont redresseur 20. De la sorte, lorsque l'ensemble du circuit de charge fonctionne correctement, la fréquence de référence produite par l'étage de traitement 62 est égale à la fréquence fondamentale de l'ondulation résiduelle produite par le pont redresseur 20.

La tension brute produite par le pont redresseur 20 est appliquée à l'entrée d'un filtre passe-bande 64 dont les fréquences de coupure haute et basse, correspondent respectivement aux nombres de tours/seconde extrêmes de l'alternateur, multipliés par le nombre de paires de pôles de l'alternateur 12 et par le nombre de bras du pont redresseur 20.

Les sorties des étages 62 et 64 sont appliquées aux deux entrées d'un étage multiplieur 66, suivi d'un filtre passe-bas 68. Sur les deux sorties parallèles du filtre 68 apparaît un signal continu qui présente une amplitude maximale lorsque les fréquences des deux signaux appliqués à l'entrée du multiplieur 66 sont égales et des amplitudes moindres lorsque ces fréquences diffèrent l'une de l'autre. Le signal de sortie du filtre 68 est appliqué à l'entrée de deux étages à seuil 70 et 72. Ces étages 70-72 sont adaptés à basculer d'une position logique à l'autre lorsque leur signal d'entrée est inférieur à un premier seuil (étage 70) puis à un second de valeur proche de zéro (étage 72). Dès que le premier seuil est franchi, l'étage 70 adresse un signal logique 1 de commande d'allumage à un interrupteur électronique (non représenté) placé en série avec une première lampe-témoin 74. L'allumage de cette lampe 74 signifie que la fréquence de l'ondulation résiduelle est inférieure d'un facteur donné à la fréquence de référence du moment, que l'inducteur tournant 14 n'est plus entraîné correctement et donc que sa courroie d'entraînement présente un glissement auquel il faut remédier au plus tôt.

Dès que le second seuil est franchi, l'étage 72 bascule et prend l'état logique 0, lequel est appliqué à l'une des deux entrées d'un étage logique $\overline{\text{OU}}$ 76 (NOR en anglais). L'autre entrée de cet étage $\overline{\text{OU}}$ reçoit, par le moyen d'une liaison 78, les impulsions rectangulaires produites par l'étage modulateur 52. Dans ces conditions, la sortie de l'étage $\overline{\text{OU}}$ 76 prend l'état logique 1 lorsque ni l'un ni l'autre de ses deux signaux d'entrée est à l'état 1. Lorsqu'il en est ainsi, l'étage 76 adresse, à travers un filtre passe-bas (non représenté), un signal de commande à un interrupteur électronique (non représenté) en série avec une deuxième lampe-témoin 80. L'allumage de cette lampe 80 signifie qu'il n'y a plus d'ondulation résiduelle superposée à la tension continue délivrée par la batterie 24, ce qui veut dire soit que l'alternateur 12 ne tourne plus et donc que sa courroie d'entraînement est cassée soit que le connecteur 22 qui relie le pont redresseur 20 à la batterie 24 est desserré ou cassé. Dans les deux cas, l'allumage de la lampe-témoin 80 avertit le conducteur du véhicule qu'il faut au plus tôt faire vérifier le circuit de charge de la batterie.

Le calculateur d'injection 60 reçoit plusieurs signaux d'entrée et notamment le signal à fréquence variable produit par le capteur 58 de vitesse du moteur, un signal représentatif de la position de la pédale d'accélérateur fourni par un transducteur 82 et, dans le cadre de la présente invention, le signal de sortie de l'étage modulateur 52. En fonctionnement usuel, le calculateur 60 adresse à des étages de puissance 84, des signaux de commande d'allumage des bougies 86 du moteur et de commande d'ouverture des électrovannes des injecteurs 88. En plus de ses fonctions usuelles, le calculateur 60 est, selon l'invention, adapté à comparer la durée des impulsions périodiques à rapport cyclique modulé, fournies par l'étage modulateur 52 à une durée maximale de référence et, lorsque cette dernière est dépassée par la première, à produire un signal complémentaire de celui fourni par le transducteur de pédale d'accélérateur 82. De la sorte, lorsqu'en réponse à la position de repos de la pédale d'accélérateur, la vitesse de rotation du moteur - et donc celle de l'alternateur - descend en-dessous d'une valeur déterminée pour laquelle le courant continu moyen appliqué par le régulateur 28 à l'inducteur 14, provoque une saturation du champ magnétique engendré, un surcroît de commande d'accélération est produit par le calculateur 60. Ce qui fait remonter la vitesse de ralenti du moteur, puis diminuer la durée des impulsions délivrées par l'étage modulateur 52 et finalement rendre son efficacité au régulateur 28.

La description qui précède montre qu'avec les perfectionnements selon l'invention, le régulateur de charge 28 est placé dans des conditions optimales de fonctionnement : son environnement (température et vibrations) ne lui est plus défavorable et sa connectique associée est simplifiée. En outre, comme sa température interne est, par l'agencement utilisé, toujours proche de celle de la batterie, la loi de variation suivie par la valeur de consigne de la tension continue à produire par le pont redresseur, peut se confondre avec la loi théorique de charge de la batterie en fonction de sa température. Ce qui -supprime les surcharges et les sous-charges systématiques, dommageables à la durée de vie de la batterie, qui se produisaient avec les régulateurs de charge du type antérieur. Par ailleurs, le circuit annexe 56 du régulateur 28 ajoute aux fonctions de détection des défauts du circuit antérieur, celle consistant à détecter le glissement de la courroie d'entraînement de l'alternateur cependant que le calculateur d'injection 60, modifié selon l'invention, ajoute une autre fonction, à savoir corriger le ralenti du moteur afin d'optimiser les conditions de charge de la batterie. L'invention n'est pas limitée à la forme de réalisation décrite et peut, en conséquence, faire l'objet de différentes variantes.

Une de ces variantes concerne le circuit annexe 56. Dans cette variante, les circuits 62-64-66-68 de la figure 2 sont supprimés et remplacés par un détecteur de courant continu à effet Hall, traversé par le connecteur 22 qui relie le pont redresseur 20 à la batterie 24. Le signal de sortie de ce détecteur a exactement la même signification et la même utilisation que celui du filtre passe-bas 68.

## Revendications

1. Circuit de charge de la batterie d'accumulateurs (24) d'un véhicule automobile équipé d'un moteur à injection;
   - ledit circuit de charge comprenant un alternateur (12) pourvu d'un inducteur tournant (14) entraîné par le moteur au moyen d'une courroie, un pont redresseur (20) et un régulateur électronique (28), adapté à rendre périodiquement conducteur, pendant des intervalles de temps variables, un interrupteur électronique (32) disposé en série avec ladite batterie (24) et ledit inducteur (14);
   - ledit moteur à injection comprenant des injecteurs (88) et des bougies (86), adaptés à être commandés par les signaux produits par des circuits électroniques (6), incluant un microprocesseur (60), disposés dans un boîtier (30) de commande d'injection;
   - caractérisé en ce que :
   - ledit régulateur (28) est disposé dans ledit boîtier (30) de commande d'injection;
   - ledit interrupteur (32) est disposé entre la borne (+) de la batterie (24) et l'un des balais de l'inducteur tournant (14), l'autre balai étant en permanence relié à la masse générale du véhicule.

2. Circuit de charge selon la revendication 1, du genre comprenant des circuits électroniques agencés pour détecter des défauts de charge, notamment ceux dus à un glissement ou à une rupture de ladite courroie, et pour les signaler par l'allumage d'au moins une lampe-témoin, caractérisé en ce que :
   - lesdits circuits (56) de détection des défauts de charge sont disposés, dans le boîtier (30) de commande d'injection et comprennent :
   - un circuit électronique (64) pour isoler l'ondulation résiduelle produite par le pont redresseur (20);
   - un circuit électronique (62) pour produire un signal de référence pour ladite ondulation, ledit signal de référence ayant une fréquence variable dérivée, par multiplication de fréquence, du signal fourni par un capteur (58) délivrant un signal de fréquence proportionnelle à la vitesse de rotation du moteur;
   - des circuits électroniques (66-68) pour comparer la fréquence de l'ondulation résiduelle et celle dudit signal de référence et ainsi produire un signal de sortie d'amplitude maximale lorsque ces deux fréquences sont égalées et d'amplitude réduite lorsqu'elles présentent un décalage;
   - des moyens (70-72) pour comparer ledit signal de sortie à un ou plusieurs seuils et ainsi produire des signaux logiques de commande d'allumage d'une ou plusieurs lampes-témoins (74-80) destinées à signaler un ou plusieurs défauts de charge.

3. Circuit de charge selon la revendication 2, caractérisé en ce que les moyens pour comparer les fréquences de l'ondulation résiduelle et du signal de référence comprennent un circuit multiplicateur (66) et un filtre passe-bas (68).

4. Circuit de charge selon la revendication 1, du genre comprenant des circuits électroniques agencés pour détecter des défauts de charge, notamment ceux dus à un glissement ou à une rupture de ladite courroie, et pour les signaler par l'allumage d'au moins une lampe-témoin, caractérisé en ce que lesdits circuits de détection des défauts de charge sont disposés dans le boîtier de commande d'injection (30), et comprennent :
   - un détecteur de courant continu à effet Hall dont l'élément sensible est traversé par le conducteur (22) reliant le pont redresseur (20) à la batterie (24);
   - au moins un circuit à seuil (70-72), connecté à la sortie dudit détecteur de courant, adapté à délivrer un signal logique susceptible de commander l'allumage d'au moins une lampe-témoin (74-80) signalant au moins un défaut de charge.

5. Circuit de charge selon la revendication 1 du genre comprenant des circuits électroniques pour produire en certaines circonstances un signal de commande d'un dispositif accessoire, associé aux injecteurs (88) et adapté à modifier le ralenti du moteur, caractérisé en ce que le microprocesseur (60) du circuit (61) de commande d'injection et d'allumage du moteur est adapté à comparer à une durée maximale de référence, la durée des intervalles de conduction périodique de l'interrupteur électronique (32) et à produire un signal logique donné, lorsque la durée desdits intervalles est supérieure à ladite durée de référence ledit signal logique étant appliqué audit dispositif accessoire afin d'augmenter la vitesse de ralenti du moteur.

FIG. 1

REGULATEUR
DE CHARGE

28

BOITIER
D'INJECTION

30

CONSOMMATEURS

40

42

FIG. 2

EP 0 521 770 A1

**Office européen des brevets**

# RAPPORT DE RECHERCHE EUROPEENNE

Numero de la demande

EP 92 40 1854

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | FR-A-2 608 215 (J.-L. CAMPOS)<br>* page 1, ligne 27 *<br>* abrégé; revendications 1,5; figure 1 *<br>--- | 1,2,5 | H02J7/14<br>H02J7/24 |
| Y | GB-A-2 202 059 (MITSUBISHI DENKI K.K.)<br>* page 7, ligne 12 - page 9, ligne 12; figure 2 *<br>--- | 1,2,5 | |
| Y | US-A-4 263 578 (T. FUKUHARA ET AL.)<br>* colonne 5, ligne 48 - colonne 6, ligne 46; figures 3,4 *<br>--- | 2 | |
| Y | US-A-4 794 898 (H. KATO)<br>* colonne 1, ligne 54 - colonne 2, ligne 19; figures 1-3 *<br>--- | 5 | |
| A | DE-A-2 710 675 (SUN ELECTRIC CORP.)<br>* revendication 10 *<br><br>----- | 4 | |

**DOMAINES TECHNIQUES RECHERCHES (Int. Cl.5 )**

H02J
G01P
F02D

Le présent rapport a été établi pour toutes les revendications

| Lieu de la recherche | Date d'achèvement de la recherche | Examinateur |
|---|---|---|
| LA HAYE | 24 SEPTEMBRE 1992 | GOETZ P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)